**Europäisches Patentamt**

**European Patent Office**

**Office européen des brevets**

(11) Veröffentlichungsnummer : **0 130 309 B1**

# (12) EUROPÄISCHE PATENTSCHRIFT

(45) Veröffentlichungstag der Patentschrift :
02.03.88

(21) Anmeldenummer : 84105035.4

(22) Anmeldetag : 04.05.84

(51) Int. Cl.⁴ : **B 27 C 9/00**

(54) **Holzbearbeitungsmaschinen.**

(30) Priorität : 11.05.83 DE 3317305

(43) Veröffentlichungstag der Anmeldung :
09.01.85 Patentblatt 85/02

(45) Bekanntmachung des Hinweises auf die Patenterteilung : 02.03.88 Patentblatt 88/09

(84) Benannte Vertragsstaaten :
AT BE CH DE FR IT LI NL SE

(56) Entgegenhaltungen :
AT-B- 279 882
DE-B- 2 107 294
US-A- 1 390 487

(73) Patentinhaber : **Maschinenfabrik Reichenbacher GmbH**
**Rosenauer Strasse 32**
**D-8635 Dörfles-Esbach (DE)**

(72) Erfinder : **Reichenbacher, Winfried**
**Von-Werthern-Strasse 8**
**D-8635 Dörfles-Esbach (DE)**
Erfinder : **Beyer, Paul-Heinz**
**Hintere Saalfelder Strasse 7**
**D-8635 Dörfles-Esbach (DE)**
Erfinder : **Zarske, Wolfgang**
**Henneberger Strasse 12**
**D-8632 Neustadt-Fürth a. Berg (DE)**

(74) Vertreter : **Füchsle, Klaus, Dipl.-Ing. et al**
**Hoffmann . Eitle & Partner Patentanwälte Arabellastrasse 4**
**D-8000 München 81 (DE)**

## Beschreibung

Die Erfindung bezieht sich auf eine Holzbearbeitungsmaschine nach dem Oberbegriff des Anspruchs 1, bei welcher ein Werkstück oder ein Paket von Werkstücken auf einem horizontalen Maschinentisch über eine vertikal wirkende Spanneinrichtung aufgespannt sind. Das Werkzeug bzw. die Werkzeuge sind vorzugsweise ortsfest an der Maschine angeordnet, während das Werkstück sämtliche Vorschubbewegungen automatisch ausführt. Die Erfindung betrifft ferner die Anordnung der Maschinen in einer Fertigungsstraße. Da die erfindungsgemäße Holzbearbeitungsmaschine für eine ganze Palette von Werkzeugen, wie Fräs-, Bohr-, Schleif- und Trenn- bzw. Sägewerkzeuge ausrüstbar ist, wird nach dem Oberbegriff des Anspruchs 1 die Erfindung im folgenden anhand der Ausgestaltung als Bandsägemaschine erläutert.

Um beispielsweise eine oder mehrere unterschiedliche Konturen aufweisende Teile aus einem Werkstück, beispielsweise einer Holzplatte oder einem Paket von Holzplatten ausschneiden zu können, muß bei feststehendem Sägeband das Werkstück komplexe Vorschubbewegungen durchführen. Das Werkstück muß nämlich außer den Vorschüben in X- und Y-Richtung auch eine Drehbewegung um die Z-Achse ausführen können.

Es sind automatische Bandsägemaschinen bekannt (Firma Tannewitz, USA), die einen automatischen Bearbeitungsablauf ermöglichen. Mit Hilfe einer Schablone und einem Hydraulik-Abtastventil wird die X- und Y-Bewegung eines das aufgespannte Werkstück tragenden Kreuzsupports sowie die Steuerung des Sägebandes erhalten. Das Sägeband kann links oder rechts von der Mittellinie verschwenkt werden, so daß es jeweils in eine parallele Position in Richtung auf die Schnittbahn gebracht wird. Beim Ausführen von sich ständig wiederholenden, komplexen Schnittbahnen wird das Sägeblatt außergewöhnlich hoch beansprucht, wodurch die Standzeit des Sägebands erheblich sinkt. Auch ist eine relativ komplexe Bandführung erforderlich, wodurch ein Auswechseln oder Umrüsten der Maschine mit einem Sägeband anderen Querschnitts nur kompliziert oder überhaupt nicht möglich ist. Vor allem ist eine Rundumbearbeitung in einer Aufspannung nicht möglich. Des weiteren ist diese Maschine zum Einsatz in einer automatischen Fertigungsstraße nicht geeignet, da auf dem Maschinentisch bzw. dessen Auflagefläche direkt die komplexen Spanneinrichtungen für die Werkstücke angeordnet sind, so daß ein ungestörter automatischer Werkstückdurchlauf beispielsweise in Y-Richtung nicht möglich ist.

Aus der DE-AS 21 07 294 ist ferner eine Konturen-Bandsägemaschine bekannt, bei welcher das Sägeband, abgesehen davon, daß es durch den insgesamt kippbaren Maschinenrahmen geneigt werden kann, feststehend angeordnet ist. Sämtliche Vorschubbewegungen, also X-, Y- und Drehbewegung werden vom Werkstück mit Hilfe eines Kreuzschlittens und eines darauf befestigten Drehtisches vorgenommen.

Die Drehbewegung wird dabei über eine auf dem Werkstück aufgeklebte Schablone und eine entsprechende Abtastvorrichtung gesteuert. Es muß hier folglich auf jedem zu bearbeitenden Werkstück bzw. Werkstückpaket vorab eine Schablone befestigt werden. Diese bekannte Maschine ist somit nur zum Ausschneiden jeweils eines großflächigen Teiles geeignet. Sie ist nicht verwendbar zum Ausschneiden mehrerer Teile aus einer einzigen Holzplatte. Auch schmale Teile können nicht ausgesägt werden, da immer nur ein Stück bearbeitet und dadurch dieses eine Stück nicht zufriedenstellend auf dem Drehtisch festgespannt werden kann. Ferner ist ein einfaches Einordnen dieser bekannten Maschine in einer vollautomatischen Fertigungsstraße ohne Zuhilfenahme von aufwendigen Zu- und Abführeinrichtungen nicht möglich.

Gegenüber diesem Stand der Technik ist es Aufgabe der Erfindung, eine Holzbearbeitungsmaschine der genannten Art anzugeben, bei welcher das Spannen und Bewegen, insbesondere Drehen der Werkstücke auf der Maschine, mit konstruktiv einfachen Mitteln realisiert sind. Des weiteren soll die Maschine zum Aufbau einer automatischen Fertigungsstraße ohne Zuhilfenahme zusätzlicher aufwendiger Positionier- und Fördereinrichtungen geeignet sein.

Diese Aufgabe wird gemäß der Erfindung durch eine Holzbearbeitungsmaschine mit den Merkmalen des Anspruches 1 gelöst.

Die Vorteile und überraschenden Einsatzmöglichkeiten der Maschine werden durch das Zusammenwirken mehrerer Vorkehrungen erreicht. Zum einen ist der Maschinentisch für ein freies horizontales Bewegen der Werkstücke darauf eingerichtet. Es ist folglich möglich, das Werkstück auf der Oberfläche des Maschinentisches leicht in beliebige Richtung zu verschieben oder zu verdrehen, ohne daß besondere Reibkräfte zwischen der Tischoberfläche und dem Werkstückboden auftreten. Des weiteren sind das von der Werkstückspanneinrichtung festgehaltene Werkstück und das Werkzeug zueinander verschwenkbar angeordnet. Hierdurch wird ein notwendiges zusätzliches Ausrichten, um schräge Schnitte ausführen zu können, möglich.

Zur Erzielung der genannten Eigenschaften kann der Maschinentisch zum einen als Luftkissentisch ausgebildet sein. Er ist folglich in an sich bekannter Weise mit einer Vielzahl von nach oben offenen Druckluftdüsen versehen, über welche beim Aufsetzen eines Werkstücks auf dem Maschinentisch unter diesem ein Luftkissen aufgebaut wird.

Der Druck der die Düsen des Luftkissentisches verlassenden Luft und der vertikale Spanndruck sind derart aufeinander abgestimmt, daß auch im gespannten Zustand des Werkstückes zwischen Werkstück und Tisch immer ein tragendes Luftkissen vorhanden ist, wodurch das Werkstück, auf dem Luftkissen schwimmend und gleichzeitig von dem Spann-Drehkopf festgehalten, die Vorschub- und/bzw. Drehbewegungen mit großer Genauigkeit ausführen kann.

Zum anderen kann der Maschinentisch auch als Kugelrollentisch ausgebildet sein. Er ist folglich in an sich bekannter Weise mit einer Vielzahl von nach oben gerichteten Kugelelementen bestückt, welche beim Aufsetzen eines Werkstücks auf den Maschinentisch das Werkstück leicht verschiebbar tragen.

Die relative Verschwenkbarkeit von Werkstück zu Werkzeug wird in erster Ausführung dadurch erreicht, daß die vertikal wirkende Spanneinrichtung drehbar gelagert und mit einem Drehantrieb verbunden ist ; sie bildet also einen Spann-Drehkopf. Durch diesen Spann-Drehkopf ist die Möglichkeit gegeben, durch ein einziges Element sowohl zu spannen als auch die notwendige Drehbewegung des Werkstücks zu realisieren.

Die relative Schwenkbewegung zwischen Werkstück und Werkzeug kann auch dadurch realisiert werden, daß in bekannter Weise das Bandsäge-Aggregat schwenkbar vorgesehen ist, und zwar derart, daß der Schwenkmittelpunkt mit der Sägebandschneidkante übereinstimmt.

Die hohe Genauigkeit und die konstruktive Vereinfachung der Bewegungselemente werden dadurch erreicht, daß sämtliche für die Vorschub- und Drehbewegungen benötigten Antriebe numerisch gesteuert sind. Durch diese Steuerung ist es möglich, den gesamten Arbeitsablauf zu automatisieren, wobei insbesondere eine genaue Koordinierung der Vorschub- und Drehbewegungen in bezug auf die Schnittlinienführung als auch auf die Position des Werkstückes bei der Übernahme und Weitergabe von bzw. an weitere Bearbeitungseinheiten erreicht wird.

Dieses optimale Spannen und Bewegen des Werkstückes auf dem Maschinentisch ist im Rahmen der Erfindung bei praktisch jeder Holzbearbeitungsmaschine einsetzbar, insbesondere dort, wo komplexe Vorschubbewegungen gefordert werden. Dabei kann die gesamte Maschine derart aufgebaut sein, daß der auf einem entsprechenden Maschinenbett angeordnete Maschinentisch eine Modul-Bauweise erhält und die das entsprechende Werkstück tragende Einheit ebenfalls modulartig konstruiert und direkt an dem Maschinenbett befestigt werden kann. Somit besteht die Möglichkeit, eine ganze Palette von Holzbearbeitungsmaschinen anbieten zu können, die in wirtschaftlicher Weise hergestellt bzw. bereitgestellt werden.

Durch den im wesentlichen identischen Aufbau von verschiedenen Bearbeitungen ausführenden Maschinen ist zudem der Vorteil gegeben, daß bei einer Verkettung dieser Maschinen zu einer vollautomatischen Fertigungsstraße jeweils identische Grundelemente, also z. B. gleiche Maschinenbetten und Tische, miteinander verbunden werden. So können von vornherein Anpassungschwierigkeiten vermieden und zusätzliche Hilfselemente, wie Zu- und Abführ- oder Größenausgleichbauteile, eingespart werden.

Gemäß einer Weiterbildung des Erfindungsgedankens ist es von Vorteil, wenn die Düsen des Luftkissentisches mit Ventilen ausgestattet sind, welche durch das Werkstück betätigbar sind. Hierdurch wird ermöglicht, daß immer nur aus denjenigen Düsen Luft ausströmt, die unter dem Werkstück liegen. Somit wird vermieden, daß große Mengen von Druckluft ungenützt ausströmen. Dies ist insbesondere dann wichtig, wenn sich auf dem Maschinentisch lediglich kleine oder überhaupt keine Werkstücke befinden. Zudem kann der Verlust an Druckluft sehr erheblich sein, da zur Erzeugung des der Spannkraft entgegenwirkenden Luftkissens ein bis zu dreimal höherer Luftdruck benötigt wird, wie dies bei Luftkissen, die lediglich für den Transport von Werkstücken verwendet werden, notwendig ist.

Gemäß einer anderen Weiterbildung des Erfindungsgedankens ist es vorteilhaft, wenn für die erste Zentrierung des Werkstücks auf dem Maschinentisch in das Tischinnere zurückziehbare Werkstück-Anschläge angeordnet sind. Diese Anschläge können mit Betätigungszylindern verbunden sein. Dabei kann jeder Anschlag für sich auf dem beweglichen Element des Zylinders, z. B. der Kolbenstange, angeordnet sein ; es kann aber auch ein einziger Zylinder die vorzugsweise drei Anschläge gemeinsam betätigen, also ausfahren bzw. zurückziehen. Hierdurch wird sichergestellt, daß ein von einer Zuführeinrichtung angeliefertes Werkstück auf dem Maschinentisch einfach und schnell eine genaue Positionierung erfährt. In dieser Ausrichtung wird das Werkstück dann von dem Spann-Drehkopf erfaßt, programmgemäß der Bearbeitung zugeführt und im Falle der Verkettung mit einer weiteren Bearbeitungsmaschine an diese Maschine weitergeleitet.

In einer ersten Ausführungsform kann der Luftkissentisch Teil eines an sich bekannten, die X- und Y-Vorschübe ausführenden Kreuzsupportes sein. Der Spann-Drehkopf ist dabei über einen entsprechenden Ständer oder Ausleger an dem Luftkissentisch befestigt.

In einer zweiten Ausführungsform ist z. B. der Luftkissentisch direkt auf dem feststehenden Maschinentisch vorgesehen. Auf diesem Maschinentisch oder auch direkt an dem Maschinenbett ist ein insgesamt in X-Richtung verschiebbares und quer zu dieser Richtung ausgerichtetes Portal angeordnet. An dem Portal bzw. dessen Querträger ist der Spann-Drehkopf in Y-Richtung verschiebbar angebracht. Durch die Befestigung des Werkstückes auf dem ortsfesten, gleichzeitig das notwendige Luftkissen liefernden Maschinentisch und durch die Realisierung der Vorschubbewegungen über insgesamt an das eine Tischende zurückziehbare Bewegungselemente, ist der Vorteil gegeben, daß der Maschinentisch zur Aufnahme und Abgabe des Werkstückes voll zugänglich ist und somit eine genaue Werkstückübergabe, insbesondere bei Verkettung in einen automatischen Bearbeitungsablauf, erreicht wird. Eine besonders hohe Genauigkeit der Vorschubbewegungen wird vorzugweise durch die Verwendung von vorgespannten Rollenführungen, sowohl bei der Vorschubbewegung durch das Portal in X-Richtung als auch des Spann-Drehkopfes auf dem Portal-Querträger in Y-Richtung, erzielt.

In einer weiteren, dritten Ausführungsform ist der Luftkissentisch ebenfalls auf einem feststehenden Support oder Maschinentisch vorgesehen. Der Spann-Drehkopf ist an einer um vertikale Achsen beweglichen Drehachsen-Kombination befestigt. Diese Drehachsen-Kombination besteht aus einem Arm, welcher an seinem einen äußeren Ende den Spann-Drehkopf trägt und mit seinem anderen Ende schwenkbar an einem Schwenk-Ausleger befestigt ist. Der Schwenk-Ausleger ist seinerseits verschwenkbar an einer am Maschinentisch oder Maschinenbett befestigten Säule oder dgl. vertikalen Tragelement angeordnet.

Durch die Drehachsen-Kombination in Verbindung mit dem Spann-Drehkopf ist die Möglichkeit gegeben, die gesamten, für die Bearbeitung des Werkstückes notwendigen Vorschubbewegungen durch Kombination dreier Schwenk- bzw. Drehbewegungen auf genaueste Weise zu realisieren. Es ist des weiteren der Vorteil gegeben, daß sowohl sämtliche Vorschubbewegungen als auch die Übernahme- und Weitergabebewegungen für den Zu- und Abtransport des Werkstückes in konstruktiv einfacher und genauer Weise realisiert werden. Es sind keine linearen, relativ aufwendigen Führungs- und Ausrichtungseinrichtungen notwendig. Des weiteren sind auch die während der Vorschub- und Transportbewegungen anzutreibenden Teile bzw. -Massen auf ein Minimum reduziert, wodurch, abgesehen von der Materialeinsparung, auch eine Krafteinsparnis erreicht wird. Des weiteren können durch den Wegfall der linearen Führungen die Maschinentische von miteinander verbundenen Maschinen derart nahe aneinander gerückt werden, daß praktisch ein einziger langer Maschinentisch entsteht. Dabei kann durch die Drehachsen-Kombination das Werkstück von Bearbeitungsstation zu Bearbeitungsstation im wesentlichen linear ohne Zuhilfenahme weiterer zusätzlicher Mittel übernommen, transportiert und wieder abgegeben werden. Es kann sogar auf die Zentrier-Anschläge im Maschinentisch verzichtet werden, wenn vor der ersten Bearbeitungsstation eine Ausrichte- bzw. Zentrierstation zum Bereitstellen des Werkstückes vorgesehen ist. In genau programmierter Weise wird die Spann-Drehkopf-Drehachsen-Kombination das Werkstück erfassen und auf präzise Weise weiterreichen.

Eine besonders genaue Steuerung der Bewegungsabläufe bei dieser dritten Ausführungsform wird dadurch erreicht, wenn jedem Schwenkarm bzw. jeder Drehachse eine eigene Schwenkeinrichtung bzw. ein eigener Antrieb zugeordnet ist, welcher in genauester Weise gesteuert werden kann.

Es ist von besonderem Vorteil, wenn der Spann-Drehkopf im wesentlichen mehr als drei, vorzugsweise vier im Winkel zueinander einstellbare Spannarme aufweist. Obwohl eine Dreipunkt-Aufnahme an sich die genaueste bzw. gleichmäßigste Spannung erlaubt, überwiegt wegen der Vielfältigkeit der zu bearbeitenden Werkstücke der Vorteil, den mehr Spannarme bringen. Dieser ist darin zu sehen, daß die bei großflächigen Werkstücken im wesentlichen senkrecht zueinander ausgerichteten Spannarme, bei schmalen Werkstücken mehrere genommen, eng zusammengelegt und daher eine gleichmäßige Druckkraft erlaubende Spannung ergeben.

Der Dreh-Antrieb des Spann-Drehkopfes weist ein Übersetzungsgetriebe ins Langsame auf, welches einerseits mit den Spannarmen verbunden ist und andererseits über ein Getriebe mit einem ein Meßsystem tragenden Vorschubmotor zusammenwirkt. Durch diese Antriebsart des Spann-Drehkopfes wird ein äußerst genauer Bewegungsablauf, der einfach im Aufbau ist, realisiert. Zudem ist die Möglichkeit gegeben, die Genauigkeit der Bewegung des Spann-Drehkopfes durch eine kompakte und starre Ausführungsweise maximal zu erhöhen.

Wie bereits erwähnt, erlaubt der Aufbau der erfindungsgemäßen Maschine, daß lediglich durch das Vorsehen einer speziellen Werkzeug-Aufnahme unterschiedliche Holzbearbeitungsmaschinen-Typen in einfachster Weise erstellt werden können. So kann beispielsweise dem mit dem Luftkissentisch oder Kugelrollentisch und den Vorschubelementen ausgerüstetes Maschinenbett bzw. -tisch ein Ständer zugeordnet bzw. an dem Maschinenbett befestigt werden, welcher ein Sägeband, ein Fräswerkzeug, ein Schleifwerkzeug, einen Bohrer o. ä. mit den entsprechenden Antriebselementen enthält. Die Antriebselemente können jedoch teilweise auch in einem gemeinsamen Teil, z. B. im Maschinentisch, vorgesehen sein.

Es besteht auch die Möglichkeit, einem einzigen Maschinentisch zwei oder mehrere Werkzeuge zuzuordnen, die in einem gemeinsamen Ständer oder auch in separaten Ständern aufgenommen sind. Es können folglich alle Vorteile einer Modulbauweise voll ausgeschöpft werden.

Schließlich besteht die Möglichkeit, die erfindungsgemäßen Maschinen zu automatischen Fertigungsstraßen zusammenzustellen. Hierzu werden mehrere Maschinen der gleichen Ausführungsform, die lediglich unterschiedliche Werkzeuge aufweisen, nebeneinander angeordnet. Durch die Identität der aneinandergereihten bzw. miteinander gekoppelten Maschinentische ist die einfachste Verbindung von Maschinen zu Fertigungsstraßen möglich.

Für die Anordnung von Maschinen mit Portal-Ausführung zu einer Fertigungsstraße müssen wegen den linearen Führungseinrichtungen für die Portale Übergabeeinheiten, wie Linear- oder Schwenkeinheiten mit einfachen Spannköpfen, vorgesehen werden. Durch die Übergabeeinheiten, deren Spannkopf eine ähnliche Ausführung wie die Spannteile des Spann-Drehkopfes aufweisen, ist eine einfache und sehr genaue Überführung der Werkstücke gewährleistet. Eine Nachzentrierung bzw. Ausrichtung des Werkstückes in einer nachfolgenden Station ist nicht notwendig.

Für die Zusammenstellung von Maschinen mit Drehachsen-Kombinations-Ausführung zu einer Fertigungsstraße können die Maschinen mit ihren Tischen bzw. Betten direkt aneinander gekoppelt werden. Hilfseinrichtungen zum Bewegen der Werkstücke zwischen den Stationen sind nicht notwendig.

Wie bereits beschrieben, kann mit Hilfe der Drehachsen-Kombination das Werkstück im wesentlichen linear von Station zu Station weitergereicht werden.

Durch die Modulbauweise der Maschinen ist zudem der Vorteil gegeben, daß bei Ausfall eines Elements oder einer Baugruppe einer Maschine sofort Abhilfe geschaffen werden kann, da die Lagerhaltung nur weniger Bauelemente bereits ausreicht, um bei einer ganzen Kette von Maschinen einen eventuellen Defekt zu beseitigen.

Der Erfindungsgegenstand wird nachstehend anhand der in der beigefügten Zeichnung dargestellten Ausführungsform näher erläutert. Es zeigt :

Fig. 1 eine erfindungsgemäße Holzbearbeitungsmaschine in Seitenansicht in erster Ausführungsform mit Portal,

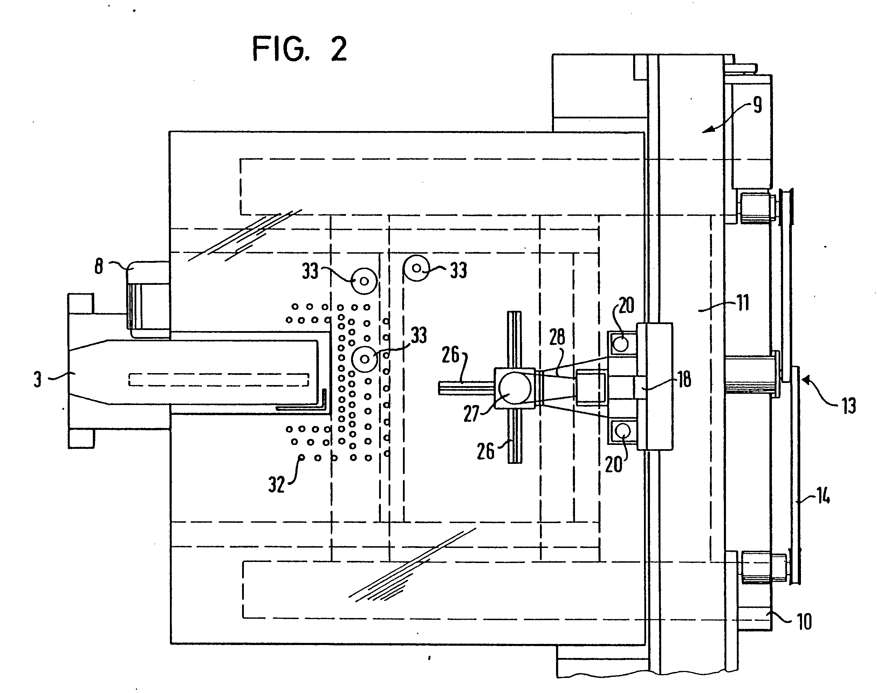

Fig. 2 eine Draufsicht der Maschine nach Fig. 1,

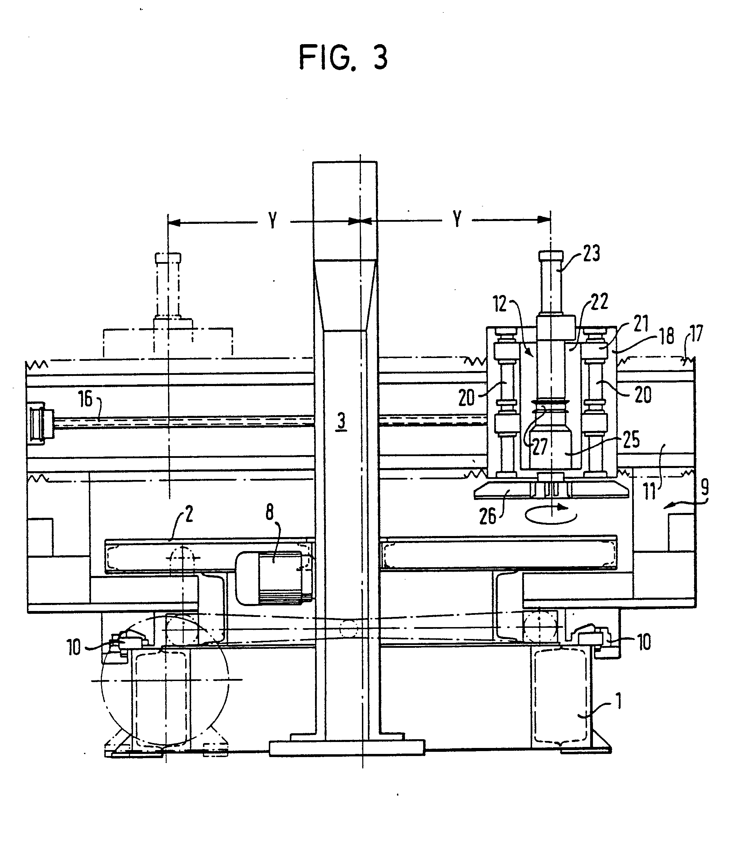

Fig. 3 eine Stirnansicht der Maschine nach den Fig. 1 und 2,

Fig. 4 eine Seitenansicht der erfindungsgemäßen Maschine in zweiter Ausführungsform mit Drehachsen-Kombination,

Fig. 5 eine Draufsicht der Maschine nach Fig. 4,

Fig. 6 eine schematische Darstellung einer Verkettung von mehreren Maschinen der ersten Ausführungsform zu einer Fertigungsstraße, und

Fig. 7 eine schematische Darstellung einer Verkettung von mehreren Maschinen der zweiten Ausführungsform zu einer automatischen Fertigungsstraße.

Die erfindungsgemäße Holzbearbeitungsmaschine, in dem in der Zeichnung dargestellten Fall eine Bandsägemaschine, weist ein Maschinenbett 1 auf, auf welchem ein Maschinentisch 2 angeordnet ist. An der einen Schmalseite des Maschinenbettes 1 ist über einen Ständer 3 das Werkzeug mit entsprechenden Halterungen, Führungen und Antrieb angeordnet. Im Falle der dargestellten Bandsägemaschine ist das Werkzeug ein Sägeband 4, welches über eine obere Rolle 5 und eine untere Rolle 6 und mit Hilfe einer Bandführung 7 vertikal geführt ist. Ein Antriebsmotor 8 und nicht dargestellte Übertragungselemente dienen der Erzeugung der entsprechenden Arbeitsbewegung des Sägebands 4.

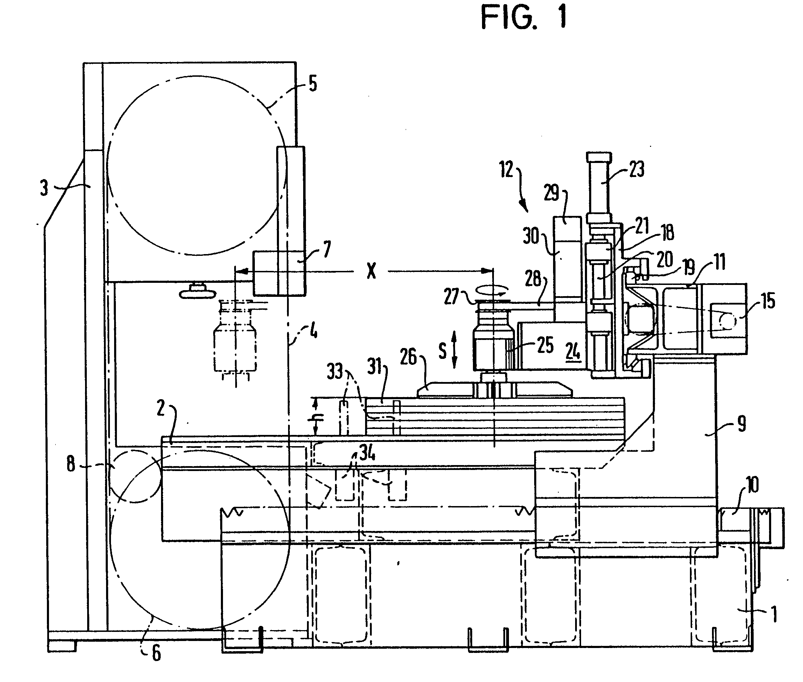

Wie in Fig. 1 dargestellt, ist an der anderen Schmalseite der Maschine ein Portal 9 angeordnet, welches auf am Maschinenbett 1 befindlichen Längsführungen 10, den Maschinentisch 2 umgreifend, in Längs-, also X-Richtung, verschiebbar geführt ist. Das Portal 9 weist einen Querträger 11 auf, auf welchem ein Spann-Drehkopf 12 in Querrichtung, also Y-Richtung, verschiebbar gelagert ist.

Der X-Vorschub wird mit Hilfe eines X- oder Längs-Vorschubantriebs 13 realisiert. Von einem mittig angeordneten Antriebsaggregat wird dabei über Zahnriemen 14 die Längs-Vorschubbewegung auf entsprechende, auf den Führungen 10 sich bewegende Übertragungselemente weitergeleitet. Durch die Ausbildung der Führungen 10 als vorgespannte Rollenführungen wird ein hohes Maß an Bewegungsgenauigkeit erreicht. Die Quer- oder Y-Bewegung bzw. -Vorschubbewegung wird mit Hilfe eines Y- oder Quer-Vorschubantriebes 15 erhalten. Der Vorschubantrieb ist mit einer Vorschubspindel 16 verbunden, während zur genauen Führung des Spann-Drehkopfes 12 auf dem Querträger 11 vorgespannte Rollenführungen 17 vorgesehen sind.

Der Spann-Drehkopf 12 weist an seiner Befestigungsseite eine Aufnahmeplatte 18 auf, welche über Lager 19 auf dem Querträger 11 abgestützt ist. Auf der Aufnahmeplatte 18 sind zwei Führungswellen 20 befestigt, auf welchen über Führungsbuchsen eine Hubplatte 22 vertikal verschiebbar angeordnet ist. An der Aufnahmeplatte 18 ist des weiteren ein Spannzylinder 23 befestigt, dessen Kolbenstange mit der Hubplatte 22 verbunden ist. Auf der Hubplatte 22 ist senkrecht ausladend ein Tragarm 24 befestigt, an dessen äußerem Ende ein Übersetzungsgetriebe ins Langsame 25 angeordnet ist. An der vertikal ausgerichteten Ausgangswelle dieses Getriebes 25 sind horizontal weisende Spannarme 26 vorgesehen, während auf die Eingangswelle des Getriebes 25 über eine Riemenscheibe 27 ein Zahnriemen 28 wirkt. Der Zahnriemen 28 erhält seine Bewegung von einem mit einem Meßsystem 29 ausgestatteten Vorschubmotor 30, welcher auf dem Tragarm 24 oder der Hubplatte 22 befestigt sein kann. Die Spannarme 26 sind derart angebracht, daß sie im Winkel zueinander nach Bedarf einstellbar sind.

Der das Werkstück 31 tragende Maschinentisch 2 ist als Luftkissentisch ausgebildet und weist dementsprechend eine Vielzahl von Düsen 32 auf, die in nicht dargestellter Weise mit einem Druckluftsystem verbunden sind.

Im Maschinentisch 2 sind des weiteren drei Anschläge 33 vorgesehen, welche jeweils mit einem an der Tischunterseite befindlichen Zylinder 34 verbunden sind.

Bei Betrieb dieser Bandsägemaschine baut sich zwischen dem Maschinentisch 2 und dem auf diesem befindlichen Werkstück 31, dargestellt durch ein Paket von übereinander geschichteten Holzplatten, durch die aus den Düsen 32 ausströmende Druckluft ein Luftkissen aus, welches das Werkstück 31 vom Maschinentisch 2 etwas anhebt. Ist das Werkstück 31 über die aus dem Maschinentisch 2 vertikal nach oben herausgefahrenen Anschläge 33 genau positioniert und der Spann-Drehkopf 12 über die X- und Y-Vorschubeinrichtungen 13 bzw. 15 in die entsprechende Position in bezug auf das Werkstück 31 gebracht worden, wird durch Betätigen des Spannzylinders 23 die Hubplatte 22 samt den darauf befindlichen Teilen abgesenkt, bis die Spannarme 26 mit vorbestimmtem Druck auf die obere Fläche des Werkstücks 31 einwirken. Spanndruck und Luftkissen sind derart aufeinander abgestimmt, daß das Werkstück 31 praktisch kontaktfrei auf dem Maschinentisch 2 bewegt werden kann. Nach der wie beschrieben erfolgten Spannung des Werkstücks 31 werden die Anschläge 33 in das Innere des Maschinentisches 2 zurückgezogen, so daß das Werkstück 31 nunmehr frei nach Programm auf dem Maschinentisch 2 bewegt werden kann. Durch die über die Spannarme 26 übertragene Spannkraft wird zwischen den Spannarmen 26 und dem Werkstück 31 als auch zwischen den einzelnen dieses Werkstück bildenden, übereinander geschichteten Holzplatten ein Anpreßkontakt erzeugt, welcher relativ hoch ist, so daß ohne weitere Befestigungsmittel über die Spannarme 26 dieses ganze Paket von übereinander geschichteten Holzplatten genau verschoben werden kann.

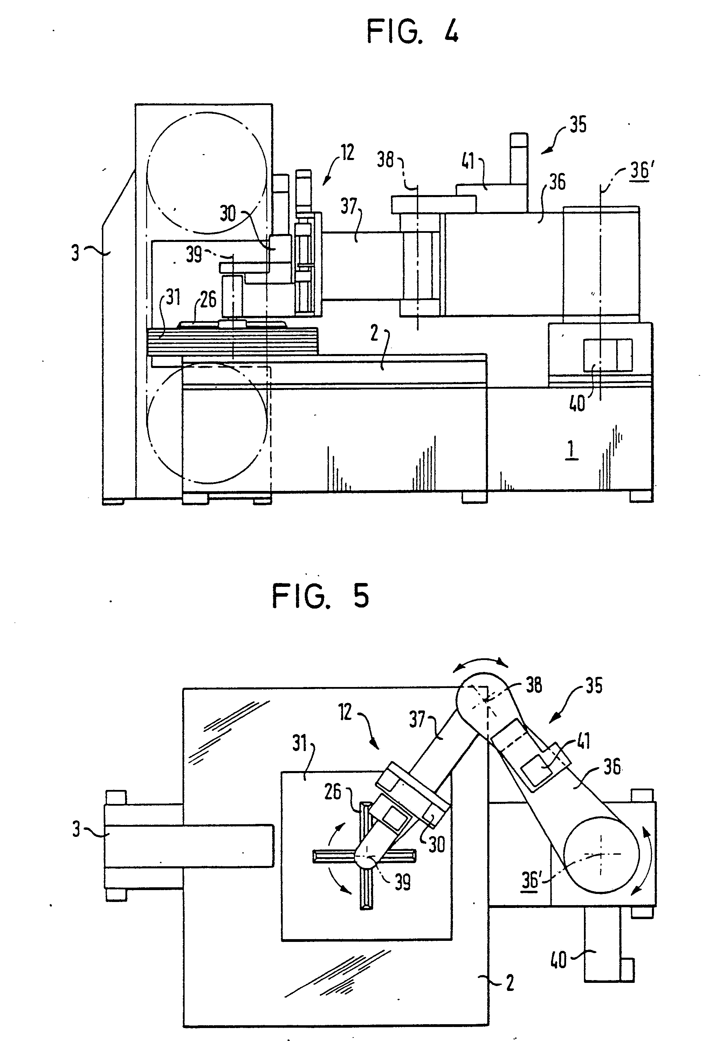

In Fig. 4 und 5 ist eine Bandsägemaschine gemäß einer zweiten Ausführungsform dargestellt. Diese Maschine umfaßt ebenfalls ein Maschinenbett 1, einen als Luftkissentisch ausgebildeten Maschinentisch 2 und einen Werkzeugständer 3. Das Werkstück 31 wird hier mit Hilfe einer Drehachsen-Kombination 35 bewegt. Die Drehachsen-Kombination 35 besteht im wesentlichen aus einer ersten, säulenförmigen, am Maschinenbett 1 befestigten Achse 36', an welcher ein Schwenkausleger 36 schwenkbar angeordnet ist. Am ausladenden Ende des Schwenkauslegers 36 ist ein Schwenkarm 37 um eine ebenfalls vertikale Achse 38 schwenkbar angebracht. Am äußeren Ende dieses Armes ist schließlich ein Spann-Drehkopf 12 befestigt, an dessen äußerem Ende die Spannarme 26, wie bereits vorstehend beschrieben, um eine vertikale Achse 39 bewegbar befestigt sind. Jeder der Achsen 36', 38, 39 ist ein Antrieb 40, 41 bzw. 30 zugeordnet. Durch eine entsprechende, vorprogrammierte Steuerung der Antriebe 40, 41, 30 kann eine derartige Vorschub-Kombination erhalten werden, daß praktisch jede beliebige Vorschub-Geschwindigkeit und Richtung erzielt werden kann.

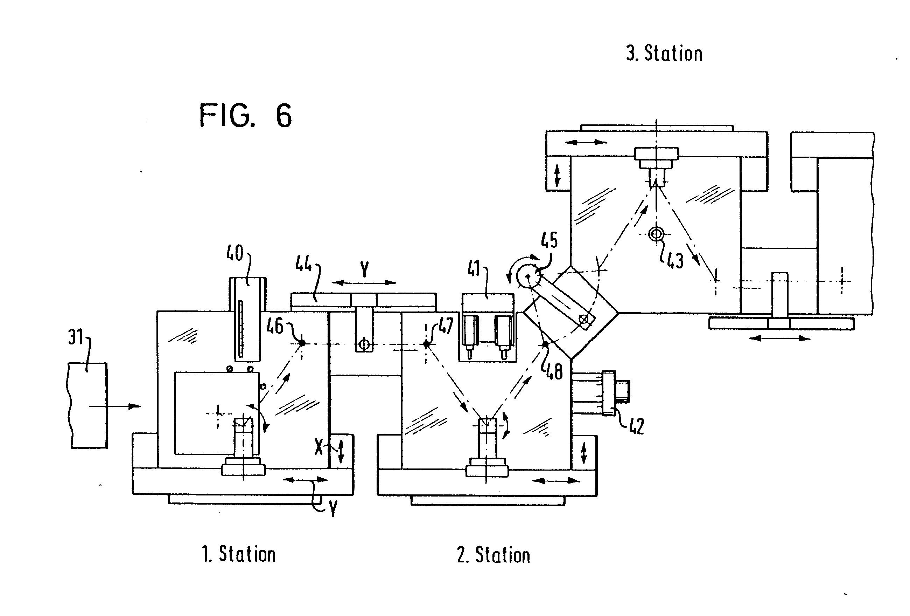

In Fig. 6 ist die Verbindung von Maschinen der ersten Ausführungsform mit Portal zu einer automatischen Fertigungsstraße dargestellt. Dieses Beispiel zeigt die Verkettung dreier Maschinen mit unterschiedlichen Werkzeugen bzw. Werkzeugaufnahmen.

Die erste Maschine weist eine Bandsäge 40 auf, und die zweite Maschine Vertikalfräsen 41 und einen Bohrkopf 42, während die dritte Maschine mit Schleifwerkzeugen 43 ausgerüstet ist. Zwischen den Maschinen sind Übergabeeinheiten vorgesehen. So ist zwischen den beiden in Linie angeordneten Maschinen eine lineare Übergabeeinheit 44, die eine Linearachse und einen Spannkopf aufweist, vorgesehen. Zwischen den zwei zueinander versetzt angeordneten Maschinen ist eine Drehachsen-Übergabeeinheit 45, die eine Drehachse und einen Spannkopf aufweist, vorgesehen.

Beim Zuführen des Werkstücks 31 zu der ersten Maschine, hier einer Bandsägemaschine, wird das Werkstück auf dem Maschinentisch 2 in Anlage mit den Anschlägen 33 gebracht. Hiernach wird das Werkstück 31 mit Hilfe des Spann-Drehkopfes 12 erfaßt, der Bandsäge in entsprechenden Vorschubbewegungen zugeführt und anschließend in eine Übergabeposition 46 gebracht. Nach Rückzug des Spann-Drehkopfes 12 wird das Werkstück 31 von dem Spannkopf der linearen Übergabeeinheit erfaßt und in eine Übergabeposition 47 auf dem Tisch der zweiten Maschine abgesetzt. Von hier wird über die Bewegungseinheiten, also Spann-Drehkopf und Portal, das Werkstück 31 übernommen, dem Fräswerkzeug 41 und dem Bohrwerkzeug 42 zugeführt und nach der Bearbeitung durch diese in einer Übergabeposition 48 abgesetzt. Mit Hilfe der Drehachsen-Übergabeeinheit 45 wird nunmehr das Werkstück 31 erfaßt und in die dritte Station bzw. auf den Maschinentisch der dritten Maschine befördert. Die Übernahme und Vorschubbewegungen für die entsprechende Bearbeitung und Weitergabe des Werkstückes 31 erfolgen dann in entsprechender Weise von weiterer Maschine zu weiterer Maschine entlang der Fertigungsstraße.

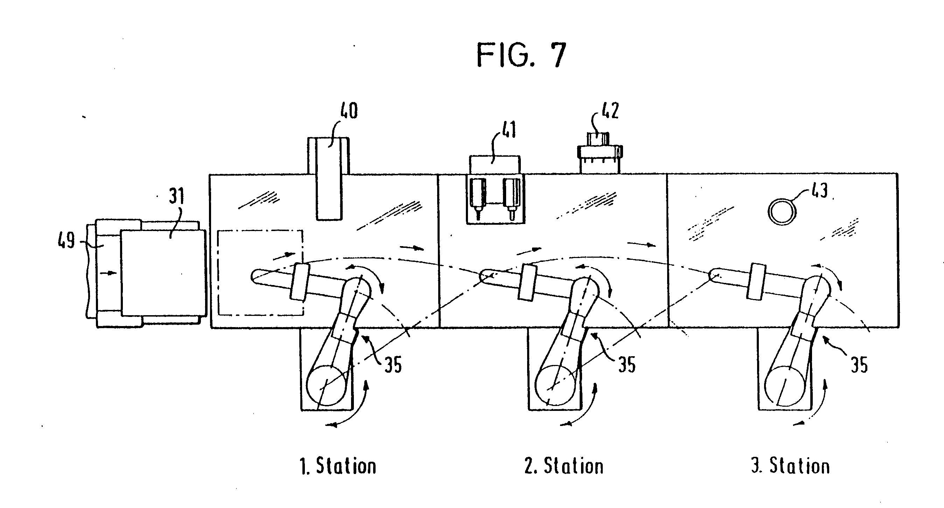

Fig. 7 zeigt das Zusammenwirken von Holzbearbeitungsmaschinen der zweiten Ausführungsform zu einer Fertigungsstraße. Der Fertigungsstraße vorgelagert ist ein Magazin 49, welches Zentrierungseinrichtungen aufweist, die das jeweilige Werkstück 31 in genau ausgerichteter Position neben dem Tisch der ersten Maschine bereitstellt. Die Drehachsen-Kombination, die bis zu der Übernahmeposition des Magazines 49 verschwenkt werden kann, übernimmt mit Hilfe ihres Spann-Drehkopfes 12 das Werkstück 31 und zieht bzw. verschiebt dieses im wesentlichen linear auf den Maschinentisch dieser ersten Bearbeitungseinheit. Nach ausgeführter Sägearbeit an dem Werkstück 31 reicht die Drehachsen-Kombination der ersten Maschine das Werkstück 31 auf den angrenzenden Maschinentisch der zweiten Bearbeitungseinheit weiter. Hier wird das Werkstück 31 von der Drehachsen-Kombination 35 der zweiten Maschine erfaßt und den beiden Bearbeitungsaggregaten, nämlich den Fräsern 41 und dem Bohrkopf 42, zur Bearbeitung mit entsprechend vorprogrammierten Vorschubbewegungen zugeführt. Anschließend setzt die gleiche Drehachsen-Kombination das Werkstück 31 auf dem Maschinentisch der nachfolgenden Maschine ab, wo es erfaßt und der nächsten Bearbeitung, nämlich dem Schleifen zugeführt wird. So ist also zu ersehen, daß beim Zusammenwirken der Holzbearbeitungsmaschinen mit Drehachsen-Kombination keine zusätzlichen Übergabeeinheiten notwendig sind, so daß sich eine äußerst einfache Anordnung ergibt.

**Patentansprüche**

1. Holzbearbeitungsmaschine, insbesondere Bandsägemaschine, mit einem Maschinentisch, einem Werkzeug, einer vertikal wirkenden Werkstück-Spanneinrichtung, Einrichtungen für die Vorschubbewegungen in X- und Y-Richtung und für eine Drehbewegung um die Z-Achse und einer automatischen Steuerung sämtlicher Bewegungsabläufe, dadurch gekennzeichnet, daß der Maschinentisch (2) zur Aufnahme und reibungsarmen Verschiebung des Werkstückes (31) als Luftkissen- oder Kugelrollentisch ausgeführt und daß die Spanneinrichtung als numerisch gesteuert verfahrbares und in vertikaler Richtung auf das Werkstück andrückbares Bauteil (12) mit horizontal weisenden Spannarmen (26) ausgebildet ist.

2. Maschine nach Anspruch 1, dadurch gekennzeichnet, daß zur relativen Verschwenkung von Werkstück (31) zu Werkzeug (4) die Werkstück-Spanneinrichtung als Spann-Drehkopf (12) ausgebildet und hierfür drehbar gelagert und mit einem Drehantrieb (30) verbunden ist.

3. Maschine nach Anspruch 1, dadurch gekennzeichnet, daß zur relativen Verschwenkung von Werkstück (31) zu Werkzeug (4) das Bandsägeaggregat derart schwenkbar vorgesehen ist, daß der Schwenkmittelpunkt mit der Sägebandschneidkante übereinstimmt.

4. Maschine nach Anspruch 1, dadurch gekennzeichnet, daß die Düsen (32) des Luftkissentisches durch das Werkstück (31) betätigbare Ventile aufweisen.

5. Maschine nach Anspruch 1, dadurch gekennzeichnet, daß die von der insgesamt unter dem Werkstück austretenden Luft erzeugte Kraft größer als der Spanndruck ist.

6. Maschine nach Anspruch 1, dadurch gekennzeichnet, daß für die erste Zentrierung des Werkstücks (31) auf dem Maschinentisch (2) in diesen zurückziehbare Anschläge (32) angeordnet sind.

7. Maschine nach Anspruch 6, dadurch gekennzeichnet, daß die Anschläge mit mindestens einem Betätigungszylinder verbunden sind.

8. Maschine nach Anspruch 1 oder 2, dadurch gekennzeichnet, daß der Maschinentisch (2) als Kreuzsupport ausgebildet ist und daß der Spann-Drehkopf (12) am Tisch angeordnet ist.

9. Maschine nach mindestens einem der vorhergehenden Ansprüche 1 bis 7, dadurch gekennzeichnet, daß der Maschinentisch (2) fest mit dem Maschinenbett (1) verbunden ist, daß an dem Maschinenbett (1) ein insgesamt in X-Richtung verschiebbares und quer zu dieser Richtung angeordnetes Portal (9) vorgesehen ist, und daß am Portal (9) der Spann-Drehkopf (12) in Y-Richtung verschiebbar angeordnet ist.

10. Maschine nach Anspruch 9, dadurch gekennzeichnet, daß zur genauen Führung des Portals (9) bzw. des Spann-Drehkopfes (12) am Maschinenbett (1) bzw. am Portal-Querträger (11) Rollen- oder Gleitführungen (10, 17) vorgesehen sind.

11. Maschine nach mindestens einem der vorhergehenden Ansprüche 1 bis 7, dadurch gekennzeichnet, daß der Maschinentisch (2) feststehend ausgebildet und der Spann-Drehkopf (12) an einer um vertikale Achsen (36, 38, 39) beweglichen Drehachsen-Kombination (35) befestigt ist, wobei ein den Spann-Drehkopf (12) an seinem äußeren Ende tragender Schwenkarm (37) schwenkbar an einem Schwenkausleger (36) angebracht ist, der seinerseits schwenkbar an einer feststehenden, vertikalen Säulenachse angeordnet ist.

12. Maschine nach Anspruch 11, dadurch gekennzeichnet, daß jedem Schwenkarm (36, 37) ein Schwenkantrieb (40, 41) zugeordnet ist.

13. Maschine nach Anspruch 1, dadurch gekennzeichnet, daß die Spannarme (26) zur Anpassung an geformte Werkstückoberflächen profiliert sind.

14. Maschine nach Anspruch 1 oder 13, dadurch gekennzeichnet, daß die Spannarme (26) in ihrer Winkellage zueinander verstellbar oder fest ausgebildet und daß die Spannarme austauschbar angeordnet sind.

15. Maschine nach Anspruch 1 und 2, dadurch gekennzeichnet, daß der Dreh-Antrieb des Spann-Drehkopfes (12) ein Übersetzungsgetriebe (25) ins Langsame aufweist, welches einerseits die Spannarme (26) trägt und andererseits über ein Riemen- (28) oder anderes Getriebe weitgehend spielfrei mit einem ein Meßsystem (29) tragenden Vorschubmotor (30) verbunden ist.

16. Maschine nach Anspruch 1, dadurch gekennzeichnet, daß das Werkzeug ein Sägeband oder Sägedraht, ein Fräswerkzeug oder ein Schleifwerkzeug ist.

17. Maschine nach Anspruch 1 und 14, dadurch gekennzeichnet, daß am Maschinenbett mehrere Ständer zur Aufnahme mehrerer unterschiedlicher Werkzeuge befestigt sind.

18. Anordnung von mehreren, gleich aufgebauten Holzbearbeitungsmaschinen mit jeweils unterschiedlichen Werkzeugen zu einer Fertigungsstraße, dadurch gekennzeichnet, daß Holzbearbeitungsmaschinen nach einem der Ansprüche 1 bis 17 eingesetzt werden.

19. Anordnung nach Anspruch 18, dadurch gekennzeichnet, daß beim Zusammenwirken von Maschinen der Portal-Ausführungsform jeweils an der dem Portal (9) gegenüberliegenden Seite zwischen je zwei aufeinanderfolgenden Maschinen Übergabeeinheiten (44, 45) vorgesehen sind.

20. Anordnung nach Anspruch 19, dadurch gekennzeichnet, daß die Übergabeeinheit eine Lineareinheit (44) ist, die einen entlang einer Linearachse beweglichen Spannkopf und eine Luftkissenplatte aufweist.

21. Anordnung nach Anspruch 19, dadurch gekennzeichnet, daß die Übergabeeinheit eine Schwenkeinheit (45) ist, die einen um eine Drehachse schwenkbaren Spannkopf und einen Luftkissentisch oder -platte aufweist.

22. Anordnung nach Anspruch 19, dadurch gekennzeichnet, daß die Übergabeeinheit (44, 45) einen Vakuumheber oder einen Greifer aufweist.

23. Anordnung nach Anspruch 18, dadurch gekennzeichnet, daß beim Zusammenwirken von Maschinen der Drehachsen-Kombinationausführung (35) die Maschinen unmittelbar aneinander gekoppelt sind, wobei ein im wesentlichen linearer Werkstück-Durchlauf erhalten wird.

## Claims

1. Woodworking machine, in particular a bandsaw machine, comprising a machining table, a tool, a workpiece clamping means working in a vertical direction, means for advancing in the X- and Y- directions and for rotating about the Z-axis and an automatic control device for all movements characterized in that the machine table (2) is constructed as an air cushion table or a table with roller bearings for frictionless displacing of the workpiece (31) and that the clamping means is formed as a numerically controlled component (12) which is displaceable and vertically pressable on to the workpiece and has horizontally extended clamping arms.

2. Machine according to claim 1 characterized in that the workpiece clamping means is formed as a clamping rotation head (12) for the relative pivoting from the workpiece (31) to the tool (4) and that herefor is rotatably journaled and is connected with a rotation drive (30).

3. Machine according to claim 1 characterized in that the bandsaw machine unit is pivotably arranged for the relative pivoting from workpiece (31) to tool (4) such that the pivot middle point coincides with the cutting edge of the saw cutting band.

4. Machine according to claim 1 characterized in that the jets (32) of the air cushion table have valves operable by the workpiece (31).

5. Machine according to claim 1 characterized in that the pressure produced by the total air discharged under the workpiece is greater than the clamping pressure.

6. Machine according to claim 1 characterized in that retractable stops (32) are arranged on the machining table (2) for the initial centering of the workpiece (32) thereon.

7. Machine according to claim 6 characterized in that the stops are connected with at least one operating cylinder.

8. Machine according to claim 1 or 2 characterized in that the machining table (2) is formed as a cross support and that the clamping rotation head (12) is arranged on the table.

9. Machine according to at least one of the previous claims 1 to 7 characterized in that the machining table (2) is rigidly connected with the machine bed (1), that a portal (9) is provided on the machine bed (1), being displaceable in the X-direction and arranged perpendicular to this direction and that the clamping rotation head (12) is arranged on the portal (9) and is displaceable in the Y-direction.

10. Machine according to claim 9 characterized in that roller or slide guides (10, 17) are provided on the machine bed (1) or on the portal cross support (11) for the exact guidance of the portal (9) or the clamping rotation head (12).

11. Machine according to at least one of the previous claims 1 to 7 characterized in that the machining table (2) is arranged to be stationary and the clamping rotation head (12) is fixed to a rotating shaft combination (35), moveable about vertical axes (36, 38, 39), a pivot arm (37) carrying the clamping rotation head (12) on its outer end being pivotably attached to a pivot extension arm (36) which itself is arranged to be pivotable on a stationary vertical column shaft.

12. Machine according to claim 11 characterized in that a pivot drive (40, 41) is arranged for each pivot arm (36, 37).

13. Machine according to claim 1 characterized in that the clamping arms (26) are profiled to accommodate shaped workpiece surfaces.

14. Machine according to claims 1 or 13 characterized in that the clamping arms (26) are adjustably in their relative angle to each other or fixedly arranged and that the clamping arms are arranged to be exchangeable.

15. Machine according to claim 1 and 2 characterized in that the rotation drive of the clamping rotation head (12) has a stepdown gearing (25) which drives the clamping arms on one side and is connected on the other side essentially backlash-free via a belt (28) or other type of gear with a feeding motor (30) provided with a measuring system (29).

16. Machine according to claim 1 characterized in that the tool is a saw cutting band or wire, a milling tool or a grinding tool.

17. Machine according to claims 1 and 14 characterized in that several stands are fixed to the machine bed for receiving several different tools.

18. Arrangement of several similarly constructed woodworking machines with in each case differing tools, forming a production line characterized in that woodworking machines according to one of the claims 1 to 17 are used.

19. Arrangement according to claim 18 characterized in that for the co-operation of machines of the portal type, between each two consecutive machines (20), transfer units (44, 45) are provided in each case on the opposite side to the portal (9).

20. Arrangement according to claim 19 characterized in that the transfer unit is a linear unit which has a clamping head movable along a linear axis and an air cushion plate.

21. Arrangement according to claim 19 characterized in that the transfer unit is a pivot unit (45), which has a clamping head pivotable about a rotation axis and an air cushion table or plate.

22. Arrangement according to claim 19 characterized in that the transfer unit (44, 45) has a vacuum lifter or a grab.

23. Arrangement according to claim 18 characterized in that for the co-operation of machines of the rotation shaft combination type (35), the machines are coupled directly to each other, whereby an essentially linear movement of the workpiece through the machine is obtained.

## Revendications

1. Machine à travailler le bois, notamment scie à ruban, comportant une table, un outil, un dispositif de serrage de pièce agissant verticalement, des dispositifs pour les mouvements d'avance dans les directions X et Y et pour un mouvement de rotation autour de l'axe Z, et une commande automatique de toutes les phases de mouvement, caractérisée par le fait que la table (2) pour recevoir la pièce (31) et la déplacer avec un faible frottement est réalisée en tant que table à coussin d'air ou table à billes, et par le fait que le dispositif de serrage est réalisé en tant que composant (12) mobile par commande numérique, apte à être appuyé en direction verticale sur la pièce et doté de bras de serrage (26) dirigés horizontalement.

2. Machine selon revendication 1, caractérisée par le fait que, pour le pivotement relatif de la pièce (31) par rapport à l'outil (4), le dispositif de serrage de pièce est réalisé sous la forme d'une tête de serrage tournante (12) et, à cet effet, est monté à rotation et lié à un entraînement de rotation (30).

3. Machine selon revendication 1, caractérisée par le fait que, pour le pivotement relatif de la pièce (31) par rapport à l'outil (4), l'ensemble comportant la scie à ruban est monté à pivotement de manière telle que le centre de pivotement coïncide avec l'arête de coupe de la scie à ruban.

4. Machine selon revendication 1, caractérisée par le fait que les ajutages de soufflage (32) de la table à coussin d'air présentent des clapets actionnables par la pièce (31).

5. Machine selon revendication 1, caractérisée par le fait que la force produite par la totalité de l'air sortant en dessous de la pièce est supérieure à la pression de serrage.

6. Machine selon revendication 1, caractérisée par le fait que des butées rétractables (32) sont agencées dans la table de machine (2), pour le premier centrage de la pièce (31) sur cette table.

7. Machine selon revendication 6, caractérisée par le fait que les butées sont liées à au moins un cylindre d'actionnement.

8. Machine selon revendication 1 ou 2, caractérisée par le fait que la table (2) est réalisée sous la forme d'un support en croix et que la tête tournante de serrage (12) est agencée sur la table.

9. Machine selon au moins l'une des revendications 1 à 7 précédentes, caractérisée par le fait que la table (2) est solidarisée au bâti (1) de la machine, par le fait qu'il est prévu, sur ce bâti (1), un portique (3) qui y est agencé de manière à être globalement mobile en translation dans la direction X et transversalement à cette direction, et par le fait que la tête de serrage tournante (12) est agencée de façon mobile dans la direction Y sur ce portique (9).

10. Machine selon revendication 9, caractérisée par le fait que des guides (10, 17) à rouleaux ou à glissement sont prévus pour guider avec précision le portique (9) ou la tête de serrage tournante (12) sur le bâti (1) ou sur la traverse (11) du portique.

11. Machine selon au moins l'une des revendications 1 à 7 précédentes, caractérisée par le fait que la table (2) est fixe et la tête de serrage tournante (12) est fixée à une combinaison (35) d'axes de rotation, mobile autour d'axes verticaux (36, 38, 39), un bras pivotant (37) dont l'extrémité extérieure porte la tête de serrage tournante (12) étant agencée à pivotement sur un bras pivotant en porte-à-faux (36), lequel est lui-même monté à pivotement sur un axe de colonne vertical fixe.

12. Machine selon revendication 11, caractérisée par le fait qu'un entraînement de pivotement (40, 41) est associé à chaque bras pivotant (36, 37).

13. Machine selon revendication 1, caractérisée par le fait que les bras de serrage (26) sont profilés pour s'adapter à des surfaces de pièce profilées.

14. Machine selon revendication 1 ou 13, caractérisée par le fait que les bras de serrage (26) sont réalisés de manière que leur position angulaire mutuelle soit réglable ou fixe, et par le fait que les bras de serrage sont remplaçables.

15. Machine selon revendications 1 et 2, caractérisée par le fait que l'entraînement de rotation de la tête de serrage tournante (12) présente une transmission réductrice (25), laquelle porte d'une part les bras de serrage (26) et est d'autre part reliée par l'intermédiaire d'une transmission à courroie (28) ou autre sensiblement sans jeu à un moteur d'avance (30) portant un système de mesure (29).

16. Machine selon revendication 1, caractérisée par le fait que l'outil est une scie à ruban ou à fil, un outil de fraisage ou un outil de ponçage.

17. Machine selon revendications 1 et 14, caractérisée par le fait que plusieurs montants pour recevoir plusieurs outils différents sont fixés au bâti de la machine.

18. Agencement, en une ligne de fabrication, de plusieurs machines à travailler le bois, ayant la même construction, comportant des outils différant de l'une à l'autre, caractérisé par le fait que les machines à travailler le bois utilisées sont des machines selon l'une des revendications 1 à 17.

19. Agencement selon revendication 18, caractérisé par le fait que, les machines associées étant du type à portique, des unités de transfert (44, 45) sont prévues entre chaque machine et la suivante, du côté opposé au portique (9).

20. Agencement selon revendication 19, caractérisé par le fait que l'unité de transfert est une unité linéaire (44) qui présente une tête de serrage mobile le long d'un axe linéaire et un plateau à coussin d'air.

21. Agencement selon revendication 19, caractérisé par le fait que l'unité de transfert est une unité pivotante (45) qui présente une tête de serrage pouvant pivoter autour d'un axe de rotation et une table ou plateau à coussin d'air.

22. Agencement selon revendication 19, caractérisé par le fait que l'unité de transfert (44, 45) présente un organe de levage à ventouse ou un organe de préhension mécanique.

23. Agencement selon revendication 18, caractérisé par le fait que, les machines associées étant réalisées avec combinaison d'axes de rotation (35), ces machines sont directement couplées l'une à l'autre, le passage des pièces s'effectuant de façon sensiblement linéaire.

# FIG. 1

0 130 309

FIG. 2

# FIG. 3

# FIG. 4

# FIG. 5

FIG. 6

3. Station

1. Station

2. Station

# FIG. 7

1. Station         2. Station         3. Station